# EUROPEAN PATENT SPECIFICATION

(11) **EP 1 729 443 B1**
(45) Date of publication and mention of the grant of the patent: **04.03.2015**
(21) Application number: 05721585.7
(22) Date of filing: 22.03.2005
(51) Int. Cl.: H04M 3/42, H04W 8/18, H04W 12/08

(54) **SERVICE CLASS CONTROL SYSTEM, SERVICE CLASS CONTROL DEVICE, TERMINAL DEVICE, SERVICE CLASS CONTROL METHOD, AND PROGRAM**
DIENSTKLASSENSTEUERSYSTEM, DIENSTKLASSENSTEUERVORRICHTUNG, ENDGERÄT, DIENSTKLASSENSTEUERVERFAHREN UND PROGRAMM
SYSTÈME DE CONTRÔLE D'UNE CLASSE DE SERVICES, DISPOSITIF DE CONTRÔLE D'UNE CLASSE DE SERVICES, TERMINAL, PROCÉDÉ DE CONTRÔLE D'UNE CLASSE DE SERVICES, ET PROGRAMME

(30) Priority: 23.03.2004 JP 2004085693
(43) Date of publication of application: 06.12.2006
(73) Proprietor: JVC KENWOOD Corporation, Kanagawa 221-0022 (JP)
(72) Inventor: MATSUHASHI, Keiichi, Yokohama-shi, Kanagawa 2450013 (JP)
(74) Representative: Leinweber & Zimmermann
(86) International application number: PCT/JP2005/005658
(87) International publication number: WO 2005/091560

(56) References cited:
- WO-A1-03/088635
- WO-A1-2004/057835
- JP-A- 2002 142 010
- US-A- 5 233 656
- US-A1- 2002 078 185
- US-A1- 2004 043 788

## Description

### Technical Field

The present invention relates to a service class control system, a service class control server and a terminal device.

### Background Art

A terminal device such as a cellular phone uses a method of defining service range classes (service classes) for the purpose of making a difference in the range of service which users can enjoy among terminal devices (see, e.g., Japanese Patent No. 2,659,342). In this method, each terminal device stores data indicating its own service class and provides a service within a range corresponding to a service class indicated by the data, in accordance with operation by an administrator who has the authority to provide or manage services.

US 2004/0043788 A1 discloses a management of parameters in a removable user identity module. To this end, parameters stored in a device management server are downloaded to a mobile station. Thereupon, the mobile station transmits a response to the device management server acknowledging a successful parameter transfer.

US 2002/0078185 A1 discloses a method and an arrangement for configuring a mobile telephone. To this end, configuration data relating to access of the selected operator's digital services, and to the selected e-mail provider's services, including personalized information, are fetched from a database and are placed in a configuration message which is transmitted to the mobile telephone. Upon receipt of the configuration message the mobile telephone performs and automatic configuration process.

### Disclosure of the invention

Since data indicating the service classes of terminal devices are important pieces of information for designating the range of service provided to users of the terminal devices, it is necessary to prevent unauthorized tampering of the data by those without the authority to modify assignment of the service classes. For this reason, conventionally, in order to cause a terminal device to store data indicating a service class, a writer exclusively used to write such data into nonvolatile memory (e.g., EEPROM (Electrically Erasable Programmable Read Only Memory) or the like) in the terminal device is cable-connected to the terminal device, and an administrator operates the writer.

In this case, to transmit data between the terminal device and the writer, it is necessary to use a special procedure for ensuring a high level of security. It is also necessary for each of the writer and terminal device to have a special mechanism for preventing unauthorized external access and ensuring a high level of security.

However, in the above-described method, each time the need to, e.g., modify the service class of the terminal device or erase the service class data arises, a user needs to pass the terminal device to the administrator. This causes the user inconvenience.

In the method, if data which the terminal device stores is once modified without authorization, it is difficult to check whether the tampered data is valid unless there is any good reason such as a defect in the tampered data itself.

The present invention has been made in consideration of the circumstances, and has as its object to provide a service class control system, service class control server and, terminal device for facilitating modification of a service class of a terminal device or disabling unauthorized modification of the service class.

The above object is achieved by a service class control system according to claim 1, a service class control server according to claims 2 and 3 and a terminal device according to claim 4, respectively. In other words, a service class control system according to a first aspect is a service class control system comprising a service class control device and a plurality of terminal devices connected to the service class control device:
said service class control device comprising:
   means for storing, for each terminal device, service class data indicative of the range of service served by the terminal device; and
   means for specifying, on the basis of the identification data and service class data , the range of service which the terminal device can serve and transmitting data indicative of the specified range of service to the terminal device, in response to a signal carrying identification data for identifying the terminal device and a request for a start of providing one or more services, when the identification data transmitted from the terminal device is received at the service class control device and the terminal device requests the start of providing one or more services; and
the terminal device comprising:
   means for transmitting the identification data for identifying the terminal device to the service class control device and requesting a start of providing a service by the terminal device; and
   means for and storing data indicative of the range of service which the terminal device can serve and providing one or more services lying within the range indicated by the stored data, when the data indicative of the range of service transmitted from the service class control device is received at the terminal device.

A service class control device according to a second aspect is characterized by comprising
means for storing, for each external terminal device, service class data indicative of the range of service served by the terminal device, said external terminal device performing predetermined processing so as to provide one or more services to a user; and
means for specifying, on the basis of the identification data and service class data , the range of service which the terminal device can serve and transmitting data indicative of the specified range of service to the terminal device, in response to a signal carrying identification data for identifying the terminal device and a request for a start of providing one or more services, when the identification data transmitted from the terminal device is received at the service class control device and the terminal device requests the start of providing one or more services.

A terminal device according to a third aspect is a terminal device which provides one or more services to a user by executing predetermined processing, comprising:
means for transmitting, to an external device, identification data which identifies the terminal device and for requiring a start of providing the service; and
means for obtaining and storing the data indicative of the range of service which the terminal device can serve and for providing the service lying within the range indicated by the stored data, when the data indicative of the range of service transmitted from the external device is received at the terminal device.

A service class control method according to a fourth aspect is a service class control method for controlling the range of service provided by each external terminal device which provides one or more services to a user by executing predetermined processing, comprising the steps of:
storing, for each terminal device, service class data indicative of the range of service served by the terminal device; and
specifying, on the basis of the identification data and service class data , the range of service which the terminal device can serve and transmitting data indicative of the specified range of service to the terminal device, in response to a signal carrying identification data for identifying the terminal device and a request for a start of providing one or more services, when the identification data transmitted from the terminal device is received at the service class control device and the terminal device requests the start of providing one or more services.

A service class control method according to a fifth aspect is a service class control method for controlling the range of service served by a terminal device in the terminal device which performs predetermined processing so as to provide one or more services to a user, characterized by including:
transmitting identification data for identifying the terminal device to an external device and requesting a start of providing the service; and
obtaining and storing data indicative of the range of service which the terminal device can serve and providing one or more services lying within the range indicated by the stored data, when the data indicative of the range of service transmitted from the external device is received at the terminal device.

A program according to a sixth aspect is characterized by causing a computer to operate as a service class control device, the service class control device comprising:
means for storing, for each external terminal device, service class data indicative of the range of service served by the terminal device, said external terminal device performing predetermined processing so as to provide one or more services to a user; and
means for specifying, on the basis of the identification data and service class data , the range of service which the terminal device can serve and transmitting data indicative of the specified range of service to the terminal device, in response to a signal carrying identification data for identifying the terminal device and a request for a start of providing one or more services, when the identification data transmitted from the terminal device is received at the service class control device and the terminal device requests the start of providing one or more services.

A program according to a seventh aspect is characterized by causing a computer to operate as a terminal device which provides one or more services to a user by executing predetermined processing, the terminal device comprising:
means for transmitting, to an external device, identification data which identifies the terminal device and for requiring a start of providing the service; and
means for obtaining and storing the data indicative of the range of service which the terminal device can serve and for providing the service lying within the range indicated by the stored data, when the data indicative of the range of service transmitted from the external device is received at the terminal device.

### Brief Description of the Drawings

Figure 1 is a block diagram showing the configuration of a mobile telephone system according to an embodiment of the present invention;
Figure 2 is a block diagram showing the configuration of a service class management server;
Figure 3 is a block diagram showing the configuration of a user terminal; and
Figure 4 is a flowchart showing the procedure for a service class control process.

### Best Mode for Carrying Out the Invention

An embodiment of the present invention will be explained below with reference to the drawings, taking a mobile telephone system as an example.

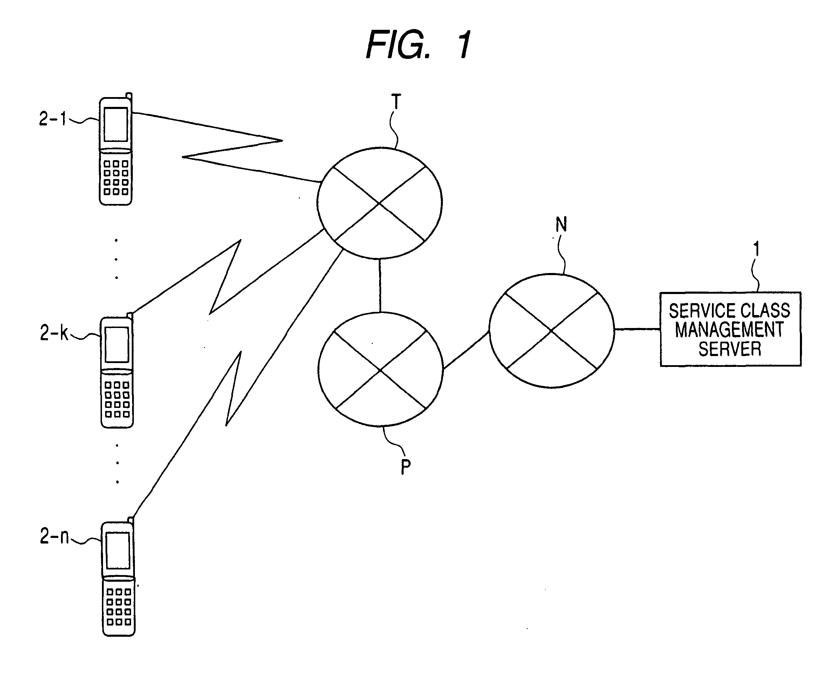

Figure 1 shows the configuration of a mobile telephone system according to the embodiment of the present invention. As shown in Figure 1, the mobile telephone system is composed of a service class management server 1 and a plurality of user terminals 2-1 to 2-n (n is the total number of terminals).

A unique identification code is assigned to each of the service class management server 1 and user terminals 2-1 to 2-n. For example, an IP (Internet Protocol) address assigned to each of the service class management server 1 and user terminals 2-1 to 2-n suffices as an identification code.

The service class management server 1 is composed of, e.g., a server computer and connected to the user terminals 2-1 to 2-n through a network N, a packet network P, and a telephone network T. The user terminals 2-1 to 2-n are connected to each other through the telephone network T.

Note that the network N is composed of, e.g., the Internet and the like. The telephone network T is composed of a wireless base station used for mobile telephone communication and a telephone line. The packet network P is composed of a server computer and the like connected to the telephone network T and network N.

The telephone network T receives and demodulates a modulated wave (to be described later) transmitted by each of the user terminals 2-1 to 2-n and supplies data obtained by the demodulation to the packet network P. The packet network P transfers the data according to the destination of the data. Specifically, for example, if the data is addressed to any of the user terminals 2-1 to 2-n (to be more specific, the identification code of any of the user terminals 2-1 to 2-n is affixed as information indicating the destination), the packet network P transmits the data to the corresponding user terminal through the telephone network T. If, for example, the data is addressed to the service class management server 1, the packet network P transmits the data to the network N.

The packet network P receives data addressed to any of the user terminals 2-1 to 2-n, having been transmitted from the service class management server 1, through the network N and supplies the received data to the telephone network T. The telephone network T generates a modulated wave representing the supplied data and wirelessly transmits the modulated wave to the destination user terminal.

Note that if the telephone network T wirelessly transmits data to any of the user terminals 2-1 to 2-n, a wireless base station which actually performs location registration (to be described later) of the destination user terminal performs the wireless transmission operation.

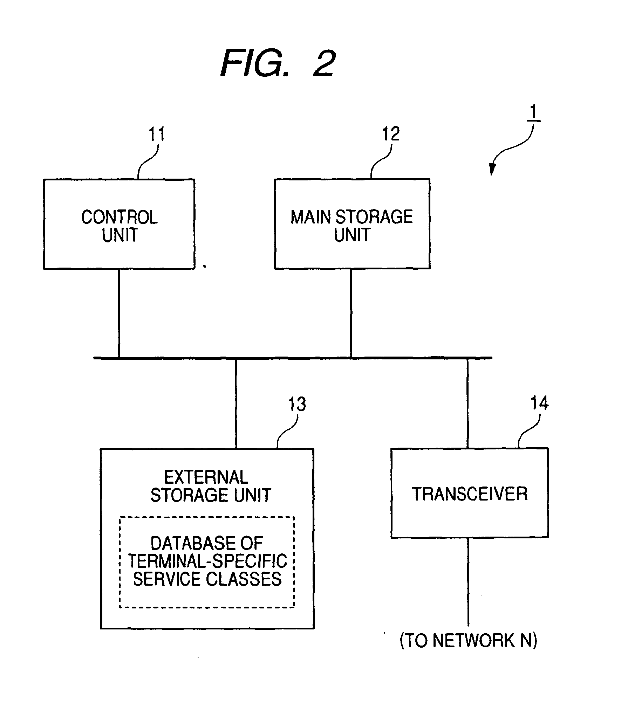

The service class management server 1 is composed of a control unit 11, a main storage unit 12, an external storage unit 13, and a transceiver 14, as shown in, e.g., Figure 2. Each of the main storage unit 12, external storage unit 13, and transceiver 14 is connected to the control unit 11 through an internal bus.

The control unit 11 is composed of a CPU (Central Processing Unit) and the like and performs processing (to be described later) in accordance with a program stored in the external storage unit 13.

The main storage unit 12 is composed of volatile memory such as RAM (Random Access Memory) and used as a work area of the control unit 11.

The external storage unit 13 is composed of rewritable nonvolatile memory such as a hard disk drive and stores in advance the program for causing the control unit 11 to perform the processing (to be described later). The external storage unit 13 supplies data which it stores to the control unit 11 in accordance with an instruction of the control unit 11.

The external storage unit 13 rewritably stores a database of terminal-specific service classes in accordance with operation by an administrator or the like of the mobile telephone system. The database of terminal-specific service classes holds, for each of the user terminals 2-1 to 2-n, service class data (to be described later) for designating the range of service (service class) which the user terminal is allowed to provide.

The transceiver 14 is composed of a modem and the like. The transceiver 14 is connected to the control unit 11 through the internal bus and also connected to the network N.

The transceiver 14 sends out data supplied from the control unit 11 to one of the user terminals 2-1 to 2-n (i.e., affixes the identification code of the destination user terminal which is one of the user terminals 2-1 to 2-n and transmits the data to the network N) in accordance with an instruction of the control unit 11. The transceiver 14 receives data addressed to it (i.e., data with the identification code of the service class management server 1 affixed) from the network N and supplies the data to the control unit 11.

The user terminals 2-1 to 2-n have substantially the same configuration. Each of the user terminals 2-1 to 2-n generates data representing voice, characters, an image, and the like by, for example, performing the function of a mobile phone handset (e.g., a cellular phone, PHS (Personal Handyphone System), GSM (Global System for Mobile communication), or the like) as a terminal. The user terminals 2-1 to 2-n exchange the generated data with each other through, the telephone network T and packet network P.

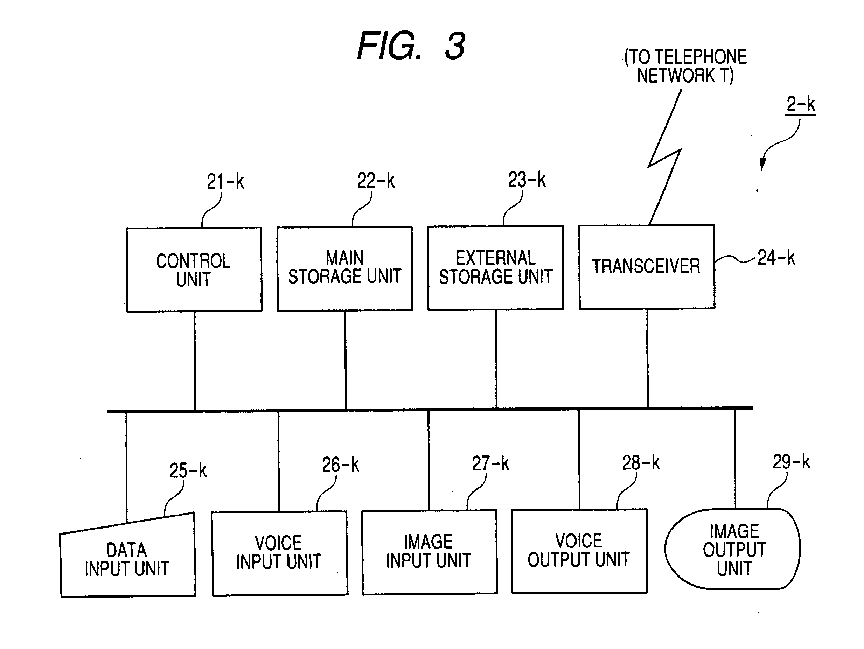

The user terminal 2-k (k is an integer not less than 1 and not more than n) comprises a control unit 21-k, a main storage unit 22-k, an external storage unit 23-k, a transceiver 24-k, a data input unit 25-k, a voice input unit 26-k, an image input unit 27-k, a voice output unit 28-k, and an image output unit 29-k, as shown in Figure 3. Each of the main storage unit 22-k, external storage unit 23-k, transceiver 24-k, data input unit 25-k, voice input unit 26-k, image input unit 27-k, voice output unit 28-k, and image output unit 29-k is connected to the control unit 21-k through an internal bus.

The control unit 21-k is composed of a CPU and the like and controls ones executed by the user terminal 2-k of processes in steps S1 to S12 (to be described later) in accordance with a service class control program (to be described later) stored in the external storage unit 23-k. The control unit 21-k controls components of the user terminal 2-k (to be specific, the main storage unit 22-k, external storage unit 23-k, transceiver 24-k, data input unit 25-k, voice input unit 26-k, image input unit 27-k, voice output unit 28-k, image output unit 29-k, and other devices that can be controlled by the control unit 21-k) in accordance with a service provision program (to be described later) stored in the external storage unit 23-k, thereby providing a service to a user. Note that the control unit 21-k provides a service of a range designated by service class data (to be described later) stored in the external storage unit 23-k.

Note that a service to be provided by the user terminal 2-k may be arbitrary as long as the service is implemented by the control unit 21-k controlling the components of the user terminal 2-k in accordance with the service provision program. Accordingly, the service may be e-mail transmission and reception or Web browsing. Alternatively, the service may be access to a Web site or the like which provides specific content or transmission and reception of a specific type of content.

The main storage unit 22-k is composed of volatile memory such as RAM and used as a work area of the control unit 21-k. The main storage unit 22-k stores the service class data described above for designating the range of service which the user terminal 2-k is allowed to provide, according to processing (to be described later).

The specific data structure of the service class data may be arbitrary. For example, if the external storage unit 23-k stores a plurality of service provision programs, the service class data may include data for specifying a service provision program which the control unit 21-k is allowed to execute (e.g., the name or the like of a corresponding service provision program).

If the service provision program is composed of a plurality of modules, the service class data may include data for specifying a module which the control unit 21-k is allowed to execute.

The service class data may be composed of data for designating a device which the control unit 21-k is allowed to control in accordance with the service provision program.

If the service provision program is one for causing the user terminal 2-k to perform the function of a Web browser, the service class data may include, e.g., data for designating a Web site which the user terminal 2-k is allowed to access.

The service class data may represent the class of a service which is allowed to be provided to a user of the user terminal 2-k. In this case, each service provision program (or each module of the service provision program or the like) only needs to cause the control unit 21-k to specify the range of processing which the user terminal 2-k is allowed to perform on the basis of the class and the control unit 21-k and the other components of the user terminal 2-k to perform only processing within the specified range.

The external storage unit 23-k is composed of nonvolatile memory such as EEPROM (Electrically Erasable Programmable Read Only Memory) and stores in advance data such as the service class control program and service provision programs described above. The external storage unit 23-k supplies the data which it stores to the control unit 21-k in accordance with an instruction of the control unit 21-k.

The transceiver 24-k is composed of a modulation circuit, demodulation circuit, RF (Radio Frequency) amplifier circuit, and the like. The transceiver 24-k is connected to the control unit 21-k through the internal bus and also connected to the network N.

The transceiver 24-k sends out data supplied from the control unit 21-k to the service class management server 1 or another destination in accordance with an instruction of the control unit 21-k. More specifically, a carrier wave is modulated in a predetermined format using the data supplied from the control unit 21-k and wirelessly transmits the obtained modulated wave.

The transceiver 24-k receives data addressed to the user terminal 2-k from the telephone network T and supplies the data to the control unit 21-k. More specifically, when the telephone network T generates and wirelessly transmits a modulated wave representing data, having reached the telephone network T via the packet network P and the like, the transceiver 24-k receives and demodulates the modulated wave and supplies the data addressed to the user terminal 2-k obtained by the demodulation to the control unit 21-k.

The data input unit 25-k is composed of a touch panel, push button, and the like and supplies data in line with operation by an operator to the control unit 21-k.

A voice input unit 26-k is composed of a microphone, AF (Audio Frequency) amplifier, A/D (Analog-to-Digital) converter, and the like. The voice input unit 26-k converts voice collected by the microphone into a voice signal, converts the voice signal into a signal in digital form and supplies the signal to the control unit 21-k.

The image input unit 27-k is composed of a CCD (Charge Coupled Device) and the like. The image input unit 27-k takes an image in its visual field, generates a signal in digital form representing the image, and supplies the signal to the control unit 21-k.

The voice output unit 28-k is composed of a D/A (Digital-to-Analog) converter, AF amplifier, speaker, and the like and reproduces voice in accordance with an instruction of the control unit 21-k.

The image output unit 29-k is composed of an LCD (Liquid Crystal Display) and the like and displays an image in line with an instruction of the control unit 21-k on its display screen.

The operation of the mobile telephone system will be explained taking, as an example, a case where the user terminal 2-k provides a service.

### (Normal Location Registration Process)

A wireless base station constituting the telephone network T wirelessly transmits a signal for checking an area where each of the user terminals 2-1 to 2-n is located (to be referred to as an interrogation wave hereinafter) at a predetermined timing (e.g., at regular intervals). Assume that such an interrogation wave contains data for identifying the wireless base station which is the source of the interrogation wave.

Upon receipt of an interrogation wave, the transceiver 24-k of the user terminal 2-k demodulates the interrogation wave and supplies data obtained by the demodulation to the control unit 21-k. When the data is supplied from the transceiver 24-k to the control unit 21-k, the control unit 21-k generates response data indicating that it has received the interrogation wave and wirelessly transmits the response data through the transceiver 24-k, in response to the data. That is, the control unit 21-k supplies the response data to the transceiver 24-k and instructs the transceiver 24-k to wirelessly transmit the response data. The transceiver 24-k generates a modulated wave representing the response data and wirelessly transmits the modulated wave, in accordance with the instruction.

Note that response data only needs to include, e.g., data for identifying the source of an interrogation wave obtained by demodulating the interrogation wave.

The wireless base station, having wirelessly transmitted the interrogation wave, receives and demodulates the modulated wave representing the response data wirelessly transmitted from the user terminal 2-k and stores the source identified by the obtained response data (i.e., the user terminal 2-k in this example) as a user terminal currently existing in an area over which the wireless base station has jurisdiction. In other words; the wireless base station performs location registration of the user terminal 2-k.

### (Service Class Control Process)

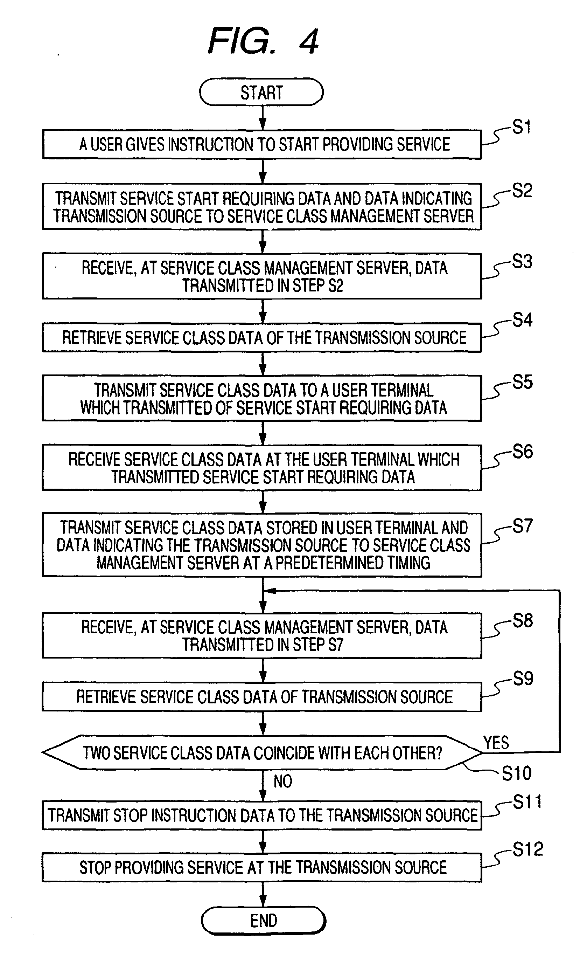

Assume that a user who wants to receive a service using the user terminal 2-k operates the data input unit 25-k and instructs the user terminal 2-k to start providing the service. In this case, the mobile telephone system performs a service class control process shown in Figure 4.

More specifically, when a user instructs the user terminal 2-k to start providing a service by operating the data input unit 25-k (step S1 of Figure 4), the control unit 21-k responds to data supplied by the data input unit 25-k and transmits service start requiring data requiring the start of providing the service and data indicating the source of the service start requiring data (to be explained below as being composed of the identification code of the user terminal 2-k) to the service class management server 1 through the transceiver 24-k in accordance with the operation (step S2). That is, the control unit 21-k supplies these data to the transceiver 24-k and instructs the transceiver 24-k to send out these supplied data to the service class management server 1. The transceiver 24-k sends out these data to the service class management server 1 in accordance with the instruction.

The service class management server 1 receives the service start requiring data and the identification code of the user terminal 2-k transmitted from the user terminal 2-k in step S2 (step S3). That is, the transceiver 14 of the service class management server 1 receives the service start requiring data and identification code through the packet network P and network N and supplies them to the control unit 11.

The control unit 11 performs the processes in steps S4 and S5 (to be described later) in response to the received service start requiring data.

More specifically, the control unit 11 searches the database of terminal-specific service classes using the received identification code (i.e., the identification code of the user terminal 2-k in this example) as a search key and retrieves service class data for designating the range of service which the user terminal 2-k is allowed to provide (step S4).

The control unit 11 transmits the retrieved service class data to the source of the service start requiring data indicated by the identification code used as the search key (i.e., the user terminal 2-k in this example) through the transceiver 14 (step S5). That is, the control unit 11 supplies the service class data to the transceiver 14 and instructs the transceiver 14 to send out the service class data to the user terminal 2-k. The transceiver 14 sends out the service class data to the user terminal 2-k in accordance with the instruction.

The user terminal 2-k receives the service class data, having been transmitted from the service class management server 1 in step S5, through the network N and packet network P and causes the main storage unit 22-k to store the service class data (step S6).

After the user terminal 2-k stores the service class data in step S6, it provides a service of the range designated by the service class data. That is, the control unit 21-k of the user terminal 2-k controls the components of the user terminal 2-k in accordance with a service provision program stored in the user terminal 2-k, thereby implementing the service of the range designated by the service class data.

After the control unit 21-k of the user terminal 2-k stores the service class data in step S6, it transmits the service class data stored in the main storage unit 22-k and the identification code of the user terminal 2-k for indicating the source of the service class data to the service class management server 1 through the transceiver 24-k at a predetermined timing (e.g., each time the user terminal 2-k receives an interrogation wave described above from the telephone network T) (step S7).

The service class management server 1 receives the service class data and the identification code of the user terminal 2-k transmitted from the user terminal 2-k in step S7 (step S8). The control unit 11 of the service class management server 1 searches the database of terminal-specific service classes using the received identification code (i.e., the identification code of the user terminal 2-k) as a search key and retrieves service class data for designating the range of service which the user terminal 2-k is allowed to provide, as in the process in step S4 (step S9).

The control unit 11 determines whether the service class data retrieved in step S9 coincides with that received in step S8 (step S10). If it is determined that they coincide with each other, the service class management server 1 waits for the user terminal 2-k to perform the process in step S7 again to transmit the service class data and the identification code of the user terminal 2-k. When the data are transmitted, the service class management server 1 receives them again (i.e., the flow returns to step S8).

On the other hand, if it is determined in step S10 that the two service class data do not coincide with each other, the control unit 11 generates data for giving an instruction to stop providing the service (to be referred to as stop instruction data hereinafter) and transmits the stop instruction data to the user terminal 2-k, having transmitted the service class data in step S7, through the transceiver 14 (step S11).

The user terminal 2-k receives the stop instruction data, having been transmitted from the service class management server 1 in step S11, through the network N and packet network P (step S12). The control unit 21-k erases the service class data stored in the main storage unit 22-k and stops providing the service, in response to the stop instruction data. That is, the control unit 21-k stops execution of the service provision program.

Examples of a service to be provided by the user terminal 2-k may include one classified as a minimal service which the user terminal 2-k is allowed to provide at all times regardless of the presence or absence and contents of service class data. In this case, the control unit 21-k of the user terminal 2-k, having been supplied with the stop instruction data, may perform processing intended only to provide the minimal service, instead of stopping execution of the service provision program.

In the mobile telephone system explained above, data indicating a service class is managed by the service class management server 1. Each of the user terminals 2-1 to 2-n is notified of its service class when it is to provide a service and provides the service in accordance with the contents of the notification. For this reason, it is difficult for those who have the user terminals 2-1 to 2-n to modify their service classes without authorization.

In the mobile telephone system, to modify the service class of any of the user terminals 2-1 to 2-n for good reason (e.g., under a contract made between the operator of the mobile telephone system and a user of the target user terminal whose service class is to be modified), it is only necessary to modify service class data stored in the service class management server 1. The user of the user terminal whose service class is to be modified need not perform the operation of passing the user terminal to others or the like. Accordingly, it is easy to modify a service class.

Note that configuration of the voice transmission and reception system is not limited to the above-described one.

For example, the user terminals 2-1 to 2-n need not necessarily perform the function of a mobile telephone terminal. The user terminal may be wired to the telephone network T. The user terminals 2-1 to 2-n need not necessarily be connected to the telephone network T or packet network P and may be connected only to the network N.

The service class management server 1 may store service class data in an encrypted state and decrypt the service class data prior to transmission. Alternatively, service class data in an encrypted state may be transmitted, and a user terminal having received the service class data may decrypt it.

The service class management server 1 may store a program for controlling the process of generating, for each of the user terminals 2-1 to 2-n, service class data to be supplied to the user terminal, instead of storing service class data. Each time the service class management server 1 receives service start requiring data, it may generate service class data for the source of the service start requiring data in accordance with the program and transmit the service class data to the source.

When service class data which the service class management server 1 stores is updated, the service class management server 1 may transmit modification notification data for notifying a user terminal corresponding to the updated service class data that it is ready for modification of the service class, in response to the update.

In this case, upon receipt of the modification notification data, the user terminal transmits data requiring modification of the service class using substantially the same procedure as that for transmitting service start requiring data in step S2. After that, the mobile telephone system may complete modification of the service class of the user terminal by performing substantially the same processing as the processes in steps S3 to S6 described above. Note that if the user terminal already stores old service class data which it stores in a process corresponding to step S6, it erases the old service class data (e.g., overwrites the old service class data with new service class data).

Instead of voluntary transmission of service class data which the user terminal 2-k stores by the user terminal 2-k in step S7, the service class management server 1 may transmit data requiring transmission of service class data to the user terminal 2-k at an arbitrary time, and the user terminal 2-k may transmit the service class data in response to the data.

The embodiment of the present invention has been explained. A service class control system, service class control device, and terminal device according to the invention need not be implemented using a special-purpose system and can be implemented using a normal computer system.

The service class management server 1, which executes the above-described process, can be configured by installing a program for causing a computer connectable to a network to execute the operation of the service class management server 1 from a recording medium (a CD-ROM, flexible disk, or the like) storing the program.

The user terminal 2-k, which executes the above-described process, can be configured by installing a program for causing a computer comprising, e.g., a microphone, speaker, AF amplifier, A/D. converter, D/A converter, RF amplifier, and the like to execute the operation of the user terminal 2-k from a recording medium storing the program.

These programs may be uploaded to, e.g., a BBS for communication lines and distributed through the communication lines. Careers may be modulated using signals representing these programs, the obtained modulated waves may be transmitted, and a device having received the modulated waves may demodulate the modulated waves to restore the programs.

The above-described processes can be executed by activating these programs and executing them under the control of an OS in the same manner as other application programs.

If the OS takes charge of part of processing or constitutes part of one component of the present invention, a program with that part removed may be stored in a recording medium. In this case, according to this invention, a program for executing functions or steps to be executed by a computer is stored in the recording medium.

## Claims

1. A service class control system comprising a service class control server (1) and a plurality of terminal devices (2-k) connected to the service class control server via a wireless telephone network (T);
wherein the service class control server comprises:
means (13) for storing, for each terminal device, service class data indicative of a range of service served by the terminal device; and
means (11) for retrieving, from the means for storing, a service class data associated with an identification data for identifying the terminal device, and for transmitting the retrieved service class data to the terminal device as a data indicative of a range of service which the terminal device can serve, in response to the identification data which is received from the terminal device and identifies the terminal device, when the terminal device requires a start of providing a service; and
wherein the terminal device comprises means for:
obtaining and storing the retrieved service class data indicative of the range of service which the terminal device itself can serve, when the terminal device receives the retrieved service class data from the service class control server, and provides services lying within the range indicated by the stored service class data;
**characterized in that**
said terminal device comprises means for:
transmitting the service class data stored in the terminal device and the identification data for identifying the terminal device to the service class control server in response to reception of an interrogation signal via the wireless telephone network;
and
the service class control server comprises means for:
retrieving, from the means for storing, a service class data associated with the identification data which the terminal device has transmitted in response to reception of the inter-rogation signal, and verifies match among the retrieved service class data and the service class data which the terminal device has transmitted in response to reception of the interrogation signal.

2. A service class control server (1) for use in a service class control system comprising the service class control server and a plurality of terminal devices (2-k) connected to the service class control server via a wireless telephone network (T); said service class control server comprises:
means (13) for storing, for each terminal device, service class data indicative of a range of service served by the terminal device; and
means (11) for retrieving, from the means for storing, a service class data associated with an identification data for identifying the terminal device, and for transmitting the retrieved service class data to the terminal device as a data indicative of a range of service which the terminal device can serve, in response to the identification data which is received from the terminal device and identifies the terminal device, when the terminal device requires a start of providing a service; and
wherein the terminal device comprises means for:
obtaining and storing the retrieved service class data indicative of the range of service which the terminal device itself can serve, when the terminal device receives the retrieved service class data from the service class control server, and provides services lying within the range indicated by the stored service class data; and
**characterized in that**
the service class control server comprises means for:
retrieving, from the means for storing, a service class data associated with the identification data which the terminal device has transmitted to the service control server in response to the reception of an interrogation signal via the wireless telephone network, and verifies match among the retrieved service class data and the service class data which the terminal device has transmitted in response to reception of the interrogation signal via the wireless telephone network.

3. The service class control server as set forth in Claim 2, wherein the service class control server (1) comprises means for transmitting service stop instruction data to the terminal device (2-k) when the service class control server can verify no match among the retrieved service class data and the service class data which the terminal device has transmitted.

4. A terminal device (2-k) for use in a service class control system comprising a service class control server (1) and a plurality of terminal devices connected to the service class controlserver via a wireless telephone network (T), said service class control server comprises:
means (13) for storing, for each terminal device, service class data indicative of a range of service served by the terminal device; and
means (11) for retrieving, from the means for storing, a service class data associated with an identification data for identifying the terminal device, and for transmitting the retrieved service class data to the terminal device as a data indicative of a range of service which the terminal device can serve, in response to the identification data which is received from the terminal device and identifies the terminal device, when the terminal device requires a start of providing a service;
wherein the terminal device comprises means for:
obtaining and storing the retrieved service class data indicative of the range of service which the terminal device itself can serve, when the terminal device receives the retrieved service class data from the service class control server, and provides services lying within the range indicated by the stored service class data; and
**characterized in that**
said terminal device comprises means for:
transmitting the service class data stored in the terminal device and the identification data for identifying the terminal device to the service class control server in response to reception of an interrogation signal via the wireless telephone network.

## Patentansprüche

1. Dienstklassensteuersystem, umfassend einen Dienstklassensteuerserver (1) und mehrere Endgeräte (2-k), die mit dem Dienstklassensteuerserver via ein drahtloses Telefonnetzwerk (T) verbunden sind;
wobei der Dienstklassensteuerserver umfasst:
eine Einrichtung (13) zum Speichern, für jedes Endgerät, von Dienstklassendaten, die einen Dienstbereich angeben, der vom Endgerät bedient wird; und
eine Einrichtung (11) zum Abrufen, aus der Einrichtung zum Speichern, von Dienstklassendaten, die zu Identifikationsdaten zum Identifizieren des Endgeräts gehören, und zum Senden der abgerufenen Dienstklassendaten an das Endgerät als Daten, die einen Dienstbereich angeben, den das Endgerät bedienen kann, in Reaktion auf die Identifikationsdaten, die aus dem Endgerät empfangen werden und die das Endgerät identifizieren, wenn das Endgerät einen Beginn einer Bereitstellung eines Dienstes benötigt; und
wobei das Endgerät eine Einrichtung umfasst zum:
Erhalten und Speichern der abgerufenen Dienstklassendaten, die den Dienstbereich angeben, den das Endgerät selbst bedienen kann, wenn das Endgerät die abgerufenen Dienstklassendaten aus dem Dienstklassensteuerserver empfängt, und Bereitstellen von Diensten, die innerhalb des Bereichs liegen, der von den gespeicherten Dienstklassendaten angegeben wird;
**dadurch gekennzeichnet, dass**
das Endgerät eine Einrichtung umfasst zum:
Senden der im Endgerät gespeicherten Dienstklassendaten und der Identifikationsdaten zum Identifizieren des Endgeräts an den Dienstklassensteuerserver in Reaktion auf den Empfang eines Abfragesignals via das drahtlose Telefonnetzwerk;
und
der Dienstklassensteuerserver eine Einrichtung umfasst zum:
Abrufen, aus der Einrichtung zum Speichern, von Dienstklassendaten, die zu den Identifikationsdaten gehören, die das Endgerät gesendet hat in Reaktion auf den Empfang des Abfragesignals, und Verifizieren einer Übereinstimmung zwischen den abgerufenen Dienstklassendaten und den Dienstklassendaten, die das Endgerät gesendet hat in Reaktion auf den Empfang des Abfragesignals.

2. Dienstklassensteuerserver (1) zur Verwendung in einem Dienstklassensteuersystem, umfassend den Dienstklassensteuerserver und mehrere Endgeräte (2-k), die mit dem Dienstklassensteuerserver via ein drahtloses Telefonnetzwerk (T) verbunden sind; wobei der Dienstklassensteuerserver umfasst:
eine Einrichtung (13) zum Speichern, für jedes Endgerät, von Dienstklassendaten, die einen Dienstbereich angeben, der vom Endgerät bedient wird; und
eine Einrichtung (11) zum Abrufen, aus der Einrichtung zum Speichern, von Dienstklassendaten, die zu Identifikationsdaten zum Identifizieren des Endgeräts gehören, und zum Senden der abgerufenen Dienstklassendaten an das Endgerät als Daten, die einen Dienstbereich angeben, den das Endgerät bedienen kann, in Reaktion auf die Identifikationsdaten, die aus dem Endgerät empfangen werden und die das Endgerät identifizieren, wenn das Endgerät einen Beginn einer Bereitstellung eines Dienstes benötigt; und
wobei das Endgerät eine Einrichtung umfasst zum:
Erhalten und Speichern der abgerufenen Dienstklassendaten, die den Dienstbereich angeben, den das Endgerät selbst bedienen kann, wenn das Endgerät die abgerufenen Dienstklassendaten aus dem Dienstklassensteuerserver empfängt, und Bereitstellen von Diensten, die innerhalb des Bereichs liegen, der von den gespeicherten Dienstklassendaten angegeben wird;
**dadurch gekennzeichnet, dass**
der Dienstklassensteuerserver eine Einrichtung umfasst zum:
Abrufen, aus der Einrichtung zum Speichern, von Dienstklassendaten, die zu den Identifikationsdaten gehören, die das Endgerät an den Dienstklassensteuerserver gesendet hat in Reaktion auf den Empfang eines Abfragesignals via das drahtlose Telefonnetzwerk, und Verifizieren einer Übereinstimmung zwischen den abgerufenen Dienstklassendaten und den Dienstklassendaten, die das Endgerät gesendet hat in Reaktion auf den Empfang des Abfragesignals via das drahtlose Telefonnetzwerk.

3. Dienstklassensteuerserver nach Anspruch 2, wobei der Dienstklassensteuerserver (1) eine Einrichtung umfasst zum Senden von Dienststopp-Anweisungsdaten an das Endgerät (2-k), wenn der Dienstklassensteuerserver keine Übereinstimmung verifizieren kann zwischen den abgerufenen Dienstklassendaten und den Dienstklassendaten, die das Endgerät gesendet hat.

4. Endgerät (2-k) zur Verwendung in einem Dienstklassensteuersystem, umfassend einen Dienstklassensteuerserver (1) und mehrere Endgeräte, die mit dem Dienstklassensteuerserver via ein drahtloses Telefonnetzwerk (T) verbunden sind, wobei der Dienstklassensteuerserver umfasst:
eine Einrichtung (13) zum Speichern, für jedes Endgerät, von Dienstklassendaten, die einen Dienstbereich angeben, der vom Endgerät bedient wird; und
eine Einrichtung (11) zum Abrufen, aus der Einrichtung zum Speichern, von Dienstklassendaten, die zu Identifikationsdaten zum Identifizieren des Endgeräts gehören, und zum Senden der abgerufenen Dienstklassendaten an das Endgerät als Daten, die einen Dienstbereich angeben, den das Endgerät bedienen kann, in Reaktion auf die Identifikationsdaten, die aus dem Endgerät empfangen werden und die das Endgerät identifizieren, wenn das Endgerät einen Beginn einer Bereitstellung eines Dienstes benötigt; und
wobei das Endgerät eine Einrichtung umfasst zum:
Erhalten und Speichern der abgerufenen Dienstklassendaten, die den Dienstbereich angeben, den das Endgerät selbst bedienen kann, wenn das Endgerät die abgerufenen Dienstklassendaten aus dem Dienstklassensteuerserver empfängt, und Bereitstellen von Diensten, die innerhalb des Bereichs liegen, der von den gespeicherten Dienstklassendaten angegeben wird;
**dadurch gekennzeichnet, dass**
das Endgerät eine Einrichtung umfasst zum:
Senden der im Endgerät gespeicherten Dienstklassendaten und der Identifikationsdaten zum Identifizieren des Endgeräts an den Dienstklassensteuerserver in Reaktion auf den Empfang eines Abfragesignals via das drahtlose Telefonnetzwerk.

## Revendications

1. Système de contrôle de classe de service comprenant un serveur de contrôle de classe de service (1) et une pluralité de terminaux (2-k) connectés au serveur de contrôle de classe de service via un réseau de téléphonie sans fil (T) ;
dans lequel le serveur de contrôle de classe de service comprend :
un moyen (13) de stockage, pour chaque terminal, de données de classe de service indicatrices d'une gamme de services servis par le terminal ; et
un moyen (11) de récupération, auprès du moyen de stockage, de données de classe de service associées à des données d'identification permettant d'identifier le terminal, et de transmission, auprès du terminal, des données de classe de service récupérées, en tant que données indicatrices d'une gamme de services que le terminal peut servir, en réaction aux données d'identification qui sont reçues de la part du terminal et identifient le terminal, lorsque le terminal requiert le commencement d'une fourniture de service ; et
dans lequel le terminal comprend un moyen pour :
obtenir et stocker les données de classe de service récupérées indicatrices de la gamme de services que le terminal lui-même peut servir, lorsque le terminal reçoit les données de classe de service récupérées en provenance du serveur de contrôle de classe de service, et fournit des services compris à l'intérieur de la gamme indiquée par les données de classe de service stockées ;
**caractérisé en ce que**
ledit terminal comprend un moyen pour :
transmettre, auprès du serveur de contrôle de classe de service, les données de classe de service stockées dans le terminal et les données d'identification permettant d'identifier le terminal, en réaction à la réception d'un signal d'interrogation via le réseau de téléphonie sans fil ;
et
le serveur de contrôle de classe de service comprend un moyen pour :
récupérer, auprès du moyen de stockage, des données de classe de service associées aux données d'identification que le terminal a transmises en réaction à la réception du signal d'interrogation, et confirmer une concordance parmi les données de classe de service récupérées et les données de classe de service que le terminal a transmises en réaction à la réception du signal d'interrogation.

2. Serveur de contrôle de classe de service (1) destiné à un système de contrôle de classe de service comprenant le serveur de contrôle de classe de service et une pluralité de terminaux (2-k) connectés au serveur de contrôle de classe de service via un réseau de téléphonie sans fil (T) ; ledit serveur de contrôle de classe de service comprenant :
un moyen (13) de stockage, pour chaque terminal, de données de classe de service indicatrices d'une gamme de services servis par le terminal ; et
un moyen (11) de récupération, auprès du moyen de stockage, de données de classe de service associées à des données d'identification permettant d'identifier le terminal, et de transmission, auprès du terminal, des données de classe de service récupérées, en tant que données indicatrices d'une gamme de services que le terminal peut servir, en réaction aux données d'identification qui sont reçues de la part du terminal et identifient le terminal, lorsque le terminal requiert le commencement d'une fourniture de service ; et
dans lequel le terminal comprend un moyen pour :
obtenir et stocker les données de classe de service récupérées indicatrices de la gamme de services que le terminal lui-même peut servir, lorsque le terminal reçoit les données de classe de service récupérées en provenance du serveur de contrôle de classe de service, et fournit des services compris à l'intérieur de la gamme indiquée par les données de classe de service stockées ;
**caractérisé en ce que**
le serveur de contrôle de classe de service comprend un moyen pour :
récupérer, auprès du moyen de stockage, des données de classe de service associées aux données d'identification que le terminal a transmises auprès du serveur de contrôle de classe de service en réaction à la réception d'un signal d'interrogation via le réseau de téléphonie sans fil, et confirmer une concordance parmi les données de classe de service récupérées et les données de classe de service que le terminal a transmises en réaction à la réception du signal d'interrogation via le réseau de téléphonie sans fil.

3. Serveur de contrôle de classe de service selon la revendication 2, dans lequel le serveur de contrôle de classe de service (1) comprend un moyen de transmission de données d'instruction d'arrêt de service auprès du terminal (2-k) lorsque le serveur de contrôle de classe de service peut confirmer l'absence de concordance parmi les données de classe de service récupérées et les données de classe de service que le terminal a transmises.

4. Terminal (2-k) destiné à un système de contrôle de classe de service comprenant un serveur de contrôle de classe de service (1) et une pluralité de terminaux connectés au serveur de contrôle de classe de service via un réseau de téléphonie sans fil (T), ledit serveur de contrôle de classe de service comprenant :
un moyen (13) de stockage, pour chaque terminal, de données de classe de service indicatrices d'une gamme de services servis par le terminal ; et
un moyen (11) de récupération, auprès du moyen de stockage, de données de classe de service associées à des données d'identification permettant d'identifier le terminal, et de transmission, auprès du terminal, des données de classe de service récupérées, en tant que données indicatrices d'une gamme de services que le terminal peut servir, en réaction aux données d'identification qui sont reçues de la part du terminal et identifient le terminal, lorsque le terminal requiert le commencement d'une fourniture de service ;
dans lequel le terminal comprend un moyen pour :
obtenir et stocker les données de classe de service récupérées indicatrices de la gamme de services que le terminal lui-même peut servir, lorsque le terminal reçoit les données de classe de service récupérées en provenance du serveur de contrôle de classe de service, et fournit des services compris à l'intérieur de la gamme indiquée par les données de classe de service stockées ;
**caractérisé en ce que**
ledit terminal comprend un moyen pour :
transmettre, auprès du serveur de contrôle de classe de service, les données de classe de service stockées dans le terminal et les données d'identification permettant d'identifier le terminal, en réaction à la réception d'un signal d'interrogation via le réseau de téléphonie sans fil.
